# FASCICULE DE BREVET EUROPEEN

(11) **EP 2 611 982 B1**
(45) Date de publication et mention de la délivrance du brevet: **01.04.2020**
(21) Numéro de dépôt: 11730032.7
(22) Date de dépôt: 08.07.2011
(51) Int. Cl.: E21B 17/00, B65D 59/06, F16L 57/00

(54) **PROTECTEUR DE TUBE D'EXTRACTION DE PÉTROLE**
BOHRGESTÄNGESCHUTZ
DRILL PIPE PROTECTOR

(30) Priorité: 30.12.2010 FR 1061379; 03.09.2010 FR 1057020
(43) Date de publication de la demande: 10.07.2013
(73) Titulaire: Premium Protector, 31000 Toulouse (FR)
(72) Inventeur: DROUIN, Alexis, F-31000 Toulouse (FR); CHARRUE, Thomas, 37260 Monts (FR); CHOFFART, Philippe, F-37000 Tours (FR)
(74) Mandataire: Regimbeau
(86) Numéro de dépôt international: PCT/EP2011/061703
(87) Numéro de publication internationale: WO 2012/028365

(56) Documents cités:
- US-A- 4 157 100
- US-A- 4 157 100
- US-A- 4 379 471
- US-A- 4 379 471
- US-A- 4 662 402
- US-A- 4 662 402
- US-B1- 6 196 270
- US-B1- 6 196 270

## Description

### DOMAINE TECHNIQUE GENERAL

La présente invention concerne le domaine des protecteurs de tubes d'extraction de pétrole, et plus particulièrement des protecteurs des filetages disposés aux extrémités de ces tubes.

### ETAT DE L'ART

Les tubes d'extraction de pétrole sont utilisés pour la réalisation de forages des puits, afin d'atteindre des profondeurs importantes.
Ces tubes présentent à chacune de leurs extrémités des filetages permettant de les relier entre eux soit directement, soit au moyen d'éléments intermédiaires.
Les extrémités filetées des tubes sont qualifiées d'extrémités mâles, tandis que les extrémités taraudées des tubes sont qualifiées d'extrémités femelles.
Conformément à la pratique de l'Homme de l'Art, un protecteur venant s'adapter sur une extrémité mâle d'un tube est qualifié de protecteur mâle (ou Pin), et un protecteur venant s'adapter sur une extrémité femelle d'un tube est qualifié de protecteur femelle (ou Box).

De manière conventionnelle, ces filetages étaient lubrifiés une première fois avant leur stockage avec une graisse dite de stockage, puis à nouveau légèrement avant utilisation, avec un lubrifiant que l'on qualifie de « opérationnel ». Cela impliquait des pertes de temps importantes lors de chaque utilisation de ces tubes.
Des tubes présentant des moyens de lubrification solides ou permanents au niveau de leurs filetages ont donc été proposés, visant ainsi à ne pas nécessiter des opérations de lubrification des filetages préalablement à chaque utilisation des tubes, les tubes étant alors lubrifiés de manière permanente dès leur fabrication.

Les tubes d'extraction de pétrole nécessitent par ailleurs des protecteurs afin de protéger leurs extrémités filetées, de manière à ce que le filetage ne soit pas endommagé lors du stockage et des manutentions lors du transport des tubes.

Ces protecteurs doivent répondre à de nombreuses exigences :
- rester en place sur le tube malgré les vibrations du transport et les phases de manipulation des tubes,
- rester en place dans des conditions de température variant fortement, typiquement de -46°C à 66°C,
- jouer un rôle d'amortisseur de choc lors des différentes étapes de manipulation du tube,
- empêcher la pollution de l'intérieur du tube et des zones usinées, c'est-à-dire assurer l'étanchéité du tube,
- pouvoir être montés et démontés facilement,
- permettre un contrôle de l'intérieur du tube, communément désigné « Drift »,
- permettre la préhension, si besoin est, du tube par des crochets logés dans les extrémités du tube.

La norme API 5CT, également appelée ISO 11960 définit plus précisément les exigences auxquelles doivent répondre ces protecteurs.

L'utilisation de lubrifiants solides vient ajouter une exigence supplémentaire de non dégradation de ces lubrifiants lors de la mise en position ou du retrait du protecteur.

Les solutions actuelles proposent des protecteurs réalisés principalement en polyéthylène haute densité (PEHD) et sont en très grande majorité usinées, ce qui implique moyens de production tels que des tours en dehors des standards de la plasturgie.
Des tentatives de réalisation de protecteurs injectés ont été proposées, mais s'avèrent peu satisfaisantes en termes de qualité finale du produit. En synthèse, les solutions actuelles ne présentent pas de solutions qui satisfassent toutes ces exigences tout en demeurant raisonnables en termes de coût.
En particulier, les protecteurs mâles ne présentent pas une liaison étanche entre le protecteur et le tube, tandis que les protecteurs femelles et mâles ont une structure entrainant soit des coûts disproportionnés, soit des protecteurs à faible résistance aux chocs. La bonne fixation et la démontabilité du protecteur ne sont pas assurées sur toute la plage de température.
Un protecteur de filetage de US 6 196 270 destiné à protéger les filetages à l'extrémité d'un tuyau comprend une partie de base, une partie filetée s'étendant axialement à partir d'une première extrémité de la partie de base et pouvant être fixée par filetage avec le tuyau et un pare-chocs annulaire allongé s'étendant axialement à partir d'une seconde extrémité de la partie de base.

### PRESENTATION DE L'INVENTION

La présente invention vise à proposer un protecteur de filetage de tube d'extraction permettant de satisfaire à ces exigences sans engendrer des coûts de production trop importants par rapport aux protecteurs conventionnels.

La présente invention propose un protecteur de filetage de tube d'extraction de pétrole comprenant :
- un segment de liaison, de forme sensiblement tronconique creux autour d'un axe central, et présentant une extrémité proximale, une extrémité distale, et un filetage complémentaire au filetage dudit tube,
- un segment pare choc présentant une extrémité de liaison et une extrémité libre, son extrémité de liaison étant dans le prolongement de l'extrémité distale du segment de liaison, ledit segment pare choc présentant :
   une couronne interne s'étendant coaxialement et dans le prolongement de l'extrémité distale du segment de liaison, et
   une couronne externe s'étendant coaxialement à partir de l'extrémité distale du segment de liaison, définissant un espace interne entre lesdites couronnes interne et externe, et réalisant une augmentation du diamètre externe du protecteur
ledit protecteur étant caractérisé en ce que l'ensemble des parois du protecteur ont une épaisseur sensiblement égale.

Selon une variante, le protecteur comprend des nervures longitudinales reliant ladite couronne interne et ladite couronne externe, lesdites nervures ayant une épaisseur sensiblement égale à l'épaisseur des couronnes interne et externe.

Selon une variante, ledit protecteur est réalisé par injection de polycarbonate.

Selon une variante, le protecteur comprend en outre une capsule montée de manière amovible dans l'extrémité libre du segment pare choc de manière à venir le fermer de manière étanche tout en permettant le test « drift » du tube sans démonter le protecteur.

L'invention concerne une variante mâle dudit protecteur, dans laquelle:
- ledit segment de liaison a un diamètre décroissant de son extrémité proximale vers son extrémité distale ;
- le filetage complémentaire au filetage dudit tube est disposé à l'intérieur dudit segment de liaison,
- la couronne interne comprend une portion tronconique dans le prolongement de l'extrémité distale du segment de liaison, et une portion ayant une forme de cylindre creux dans le prolongement de cette portion tronconique,
- la couronne externe a une forme sensiblement tronconique creux, s'étendant à partir de l'extrémité distale du segment de liaison, et dont le diamètre augmente en s'éloignant de ladite extrémité distale du segment de liaison, le diamètre maximum de ladite couronne externe étant supérieur au diamètre du segment de liaison au niveau de son extrémité proximale.

Selon un mode de réalisation particulier, l'extrémité libre du protecteur est biseautée à sensiblement 45%.

Selon un autre mode de réalisation particulier, le protecteur mâle comprend en outre un film polymère fixé sur la face interne du segment de liaison, ledit film polymère étant adapté pour assurer l'étanchéité de la liaison entre le protecteur et un tube d'extraction de pétrole sur lequel ledit protecteur est fixé.

L'invention concerne également un procédé de mise en position d'un tel protecteur mâle comprenant les étapes de :
- retrousser une partie dudit film polymère sur la face externe du segment de liaison,
- mettre en position le protecteur sur un tube d'extraction de pétrole, de manière à ce que le filetage dudit tube et le filetage complémentaire dudit protecteur coopèrent pour assurer un maintien en position du protecteur sur ledit tube,
- dérouler la partie retroussée du film polymère sur ledit tube de manière à assurer l'étanchéité de la liaison entre le protecteur et ledit tube d'extraction de pétrole.

L'invention concerne également une variante femelle dudit protecteur, dans laquelle :
- ledit segment de liaison a un diamètre croissant de son extrémité proximale vers son extrémité distale ;
- le filetage complémentaire au filetage dudit tube est disposé à l'extérieur dudit segment de liaison,
- la couronne interne est un cylindre creux, ayant un diamètre égal au diamètre du segment de liaison au niveau de son extrémité distale,
- la couronne externe comprend une cloison s'étendant radialement à partir de l'extrémité distale du segment de liaison, vers l'extérieur du protecteur, et une section sensiblement tronconique s'étendant à partir de ladite cloison dont le diamètre augmente en allant vers l'extrémité libre du segment pare choc.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente une variante mâle d'un protecteur selon l'invention ;
- la figure 2 présente un protecteur mâle selon l'invention ainsi que deux exemples de capsules pour obstruer son extrémité libre,
- les figures 3 et 4 présentent des vues en coupe du positionnement d'un tel protecteur mâle muni d'un film polymère sur un tube ;
- les figures 5 et 6 présentent deux vues d'une variante femelle d'un protecteur selon l'invention ;
- la figure 7 présente une vue en coupe d'un tel protecteur femelle mis en position sur un tube.
- La figure 8 présente une vue en 3D de ce protecteur femelle mis en position sur un tube et associé à une capsule en obstruant l'extrémité libre.

### DESCRIPTION DETAILLEE

### Protecteur mâle :

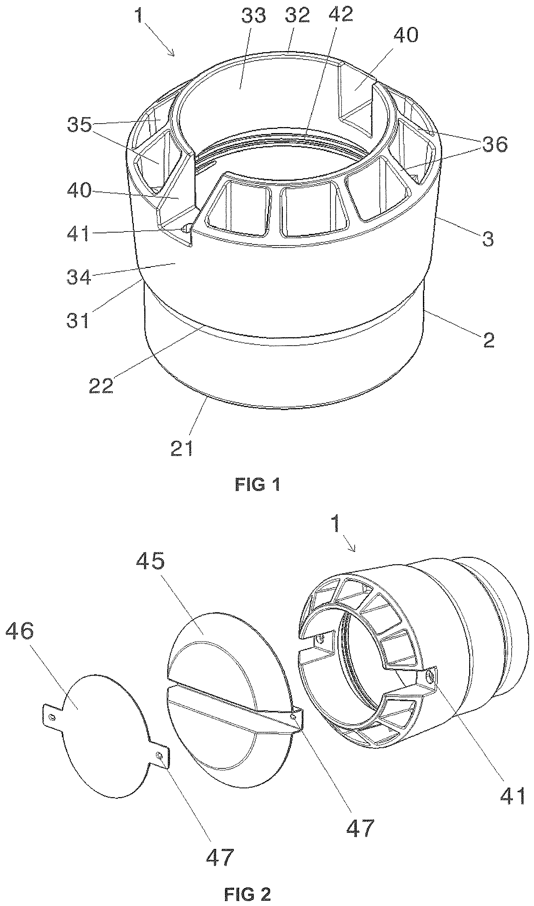

La figure 1 présente un exemple de mode de réalisation d'un protecteur mâle 1 selon l'invention.

Le protecteur mâle 1 tel qu'illustré peut être décomposé en deux parties :
- un segment de liaison 2, et
- un segment pare choc 3.

Le segment de liaison 2 présente une extrémité proximale 21 et une extrémité distale 22, et a une forme sensiblement tronconique dont le diamètre diminue de l'extrémité proximale 21 vers l'extrémité distale 22.
Le segment pare choc 3 présente quant à lui une extrémité de liaison 31 et une extrémité libre 32, son extrémité de liaison 31 étant dans le prolongement de l'extrémité distale 22 du segment de liaison 2.

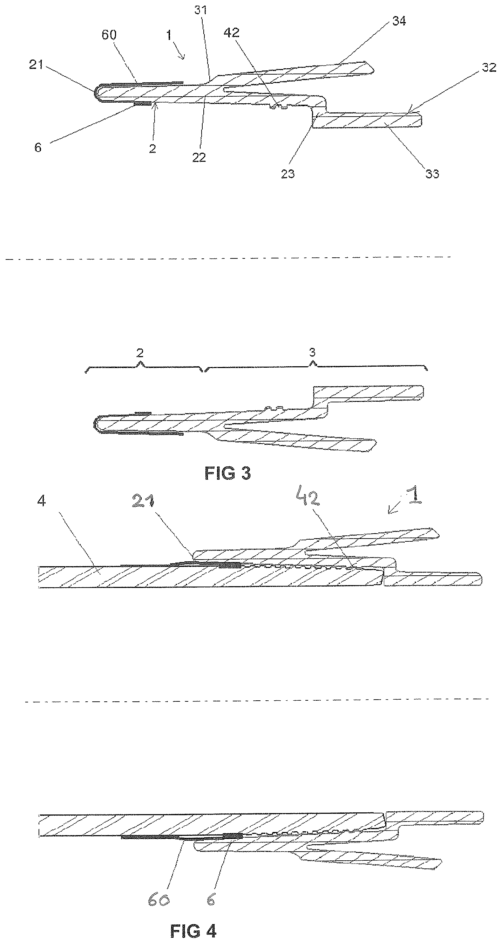

Le segment pare choc 3 comprend une couronne interne 33 et une couronne externe 34, ces deux couronnes 33 et 34 étant concentriques et définissant entre elles un espace interne 35.
La couronne interne 33 telle que représentée comprend une portion tronconique dans le prolongement de l'extrémité distale 22 du segment de liaison 2, et une portion ayant une forme de cylindre creux dans le prolongement de cette portion tronconique, le diamètre de cette section cylindrique correspondant sensiblement au diamètre interne du tube sur lequel le protecteur mâle est destinée à être positionné.
La couronne interne 33 est ainsi typiquement décalée radialement par rapport au segment de liaison 2 tronconique 2 et comprend ainsi typiquement une cloison de liaison 23, visible sur les figures 3 et 4 qui seront détaillées ci-après, cette cloison de liaison 23 étant disposée entre la portion tronconique et la portion cylindrique de la couronne interne 33.
La couronne externe 34 a quant à elle une section tronconique, dont le diamètre augmente de l'extrémité de liaison 31 vers l'extrémité libre 32 du segment de liaison 3, le diamètre maximum de la couronne externe 34 étant supérieur au diamètre maximum du segment de liaison 2. La couronne externe 34 présente ainsi typiquement un angle de 5° par rapport à l'axe du protecteur mâle 1.

Le protecteur mâle 1 illustré présente deux rainures 40 s'étendant selon un diamètre du protecteur mâle 1, à partir de l'extrémité libre 32.

Ces rainures 40 sont adaptées pour permettre d'y insérer un outil pour le vissage et le dévissage du protecteur sur un tube.

Ces rainures 40 présentent de plus des orifices 41 aménagés sur une de leurs parois, ces orifices 41 étant destinés à permettre la fixation d'une capsule sensiblement circulaire venant typiquement obstruer l'extrémité libre 32 du protecteur mâle 1.

Selon un mode de réalisation particulier, les espaces internes 35 sont remplis de résine suite à la fabrication du protecteur mâle 1. La résine est avantageusement transparente, et présente un indice sensiblement égal à celui du matériau dont est formé le protecteur. Disposer ainsi de la résine dans les espaces internes 35 du protecteur mâle 1 permet non seulement d'améliorer la transparence du protecteur 1 du fait de la continuité d'indice que permet la résine, mais également de sensiblement améliorer la résistance mécanique aux chocs du protecteur 1.

La figure 2 présente le protecteur mâle 1 présenté précédemment, ainsi que deux modes de réalisations de capsules 45 et 46 venant obturer l'extrémité du protecteur 1.
Dans ces deux modes de réalisation des capsules 45 et 46, les capsules comprennent des saillies 47 complémentaires aux orifices 41 du protecteur mâle 1, de manière à être maintenues en position au niveau de son extrémité libre 32.
Le mode de réalisation 45 de la capsule vient recouvrir toute son extrémité libre 32, et a un diamètre correspondant au diamètre maximum du protecteur mâle 1.
Le mode de réalisation 46 se contente pour sa part de venir obstruer l'ouverture définie par la couronne interne 33, et a donc un diamètre correspondant sensiblement au diamètre interne de cette couronne interne 33.

D'autres variantes de capsules sont envisageables, notamment des variantes qui ne viennent pas totalement obstruer l'ouverture du protecteur, de manière à éviter la stagnation d'eau au sein d'un tube muni de protecteurs parfaitement étanches.
Les capsules 45 ou 46 sont avantageusement reliées au corps du protecteur 1 via des moyens de liaison tels qu'une chainette, une corde ou un câble, de sorte que le protecteur 1 et la capsule associée ne puissent pas être dissociés.

Dans le mode de réalisation illustré, le protecteur mâle 1 comprend des nervures 36 longitudinales venant relier la couronne interne 33 et la couronne externe 34, et segmentant ainsi l'espace interne 35 entre la couronne interne 33 et la couronne externe 34 en de multiples compartiments.

Tel que représenté sur la figure, le protecteur mâle 1 comprend douze nervures 36 longitudinales, les côtés de chacune des rainures 40 sont délimités par deux nervures 36, et les nervures 36 restantes sont réparties de manière sensiblement uniforme entre la couronne interne 33 et la couronne externe 34.

Tel qu'illustré, l'extrémité libre 32 du protecteur mâle 1 est biseautée à sensiblement 45%, résultant en un rétrécissement du diamètre en allant vers l'extrémité libre 32. Cette inclinaison à 45% permet d'augmenter la résistance du protecteur mâle 1 aux chocs, et ainsi de protéger plus efficacement le tube sur lequel il est destiné à être monté qu'un protecteur ayant une extrémité libre 32 à angle droit.

Le protecteur mâle 1 comprend par ailleurs des filets 42 disposés au niveau de la paroi interne du segment de liaison 2 ces filets 42 étant adaptés pour venir coopérer avec les filets d'un tube sur lequel ledit protecteur mâle 1 est destiné à venir être assemblé.

Les filets 42 du protecteur mâle 1 comprennent typiquement une, deux ou trois spires, d'autres variantes étant bien entendu possibles.
Un nombre réduit de spires permet de limiter l'impact sur le lubrifiant du des filets du tube que le protecteur mâle 1 est destiné à protéger, ce nombre de spires étant toutefois choisi de manière à assurer un maintien suffisant du protecteur mâle 1 sur le tube.

### Film polymère :

Le protecteur mâle 1 tel que représenté sur la figure 1 est typiquement associé à un film polymère 60.
Ce film polymère 60 a une forme de tube, et est fixé au protecteur mâle 1 à l'aide d'un adhésif ou d'un filet de colle, typiquement au moyen d'un film adhésif 6 double face sur la face interne du segment de liaison 2, à une position intermédiaire entre les filets 42 et l'extrémité proximale 21 du segment de liaison 2.
L'adhésif est choisi de manière à ce que la fixation du film polymère 60 sur le protecteur mâle 1 soit définitive, c'est-à-dire que le film polymère 60 ne puisse pas être retiré du protecteur mâle sans se dégrader, contrairement à une fixation amovible.

Une fois fixé au protecteur mâle 1, le film polymère 60 est replié autour de l'extrémité proximale 21 de manière à venir recouvrir la paroi externe du protecteur mâle 1. La figure 3 présente un schéma de principe d'un protecteur mâle 1 muni d'un tel film polymère 60 replié sur sa paroi externe.

Une fois le protecteur mâle 1, mis en position sur un tube, cette partie du film polymère 60 qui était repliée sur la face externe du protecteur mâle 1 est déroulée de manière à venir recouvrir une partie du tube, typiquement une longueur comprise entre 15 et 20 cm.
Ainsi, le film polymère 60 réalise l'étanchéité de la liaison entre le protecteur mâle 1 et un tube sur lequel il est fixé au niveau de l'extrémité proximale 21 du protecteur mâle 1, l'étanchéité de la liaison au niveau de l'extrémité libre 32 du protecteur mâle 1 étant réalisée par une capsule non représentée sur les figures.
La figure 4 présente un schéma de principe d'un protecteur mâle 1 mis en position sur un tube fileté 4, le film polymère 60 étant déroulé sur une partie du tube fileté 4.

Le film polymère 60 est typiquement un film polymère multicouche, formé de manière à :
- présenter une face ayant une très faible adhérence, cette surface étant celle destinée à venir au contact du tube, de manière à limiter les frottements sur les filets du tube lorsque le protecteur 1 ou 7 est retiré du tube ; cette très faible adhérence est typiquement obtenue via l'ajout d'un agent glissant,
- présenter une face ayant une très forte adhérence, cette surface étant celle destinée à venir au contact du protecteur 1 ou 7, de manière à ce que le protecteur 1 ou 7 entraine le film polymère 60 lors de son retrait du tube.

Le film polymère 60 est par ailleurs extensible, de manière à permettre à la fois son repliement sur le protecteur préalablement à la mise en position du protecteur 1 ou 7 sur le tube, puis son déroulement sur la face externe du tube une fois le protecteur 1 ou 7 mis en position sur ledit tube, tout en assurant l'étanchéité de la liaison.

De plus, le film polymère 60 est réalisé de manière à ne pouvoir être déchiré, à être très résistant à la torsion et au cisaillement, de manière à ne pas se déchirer lors du vissage ou du dévissage du protecteur 1 ou 7 sur le tube.

Le film polymère est typiquement réalisé par extrusion gonflage multicouche, et présente une épaisseur typiquement comprise entre 1nm et 1mm, par exemple entre 15 et 200 µm.

### Protecteur femelle :

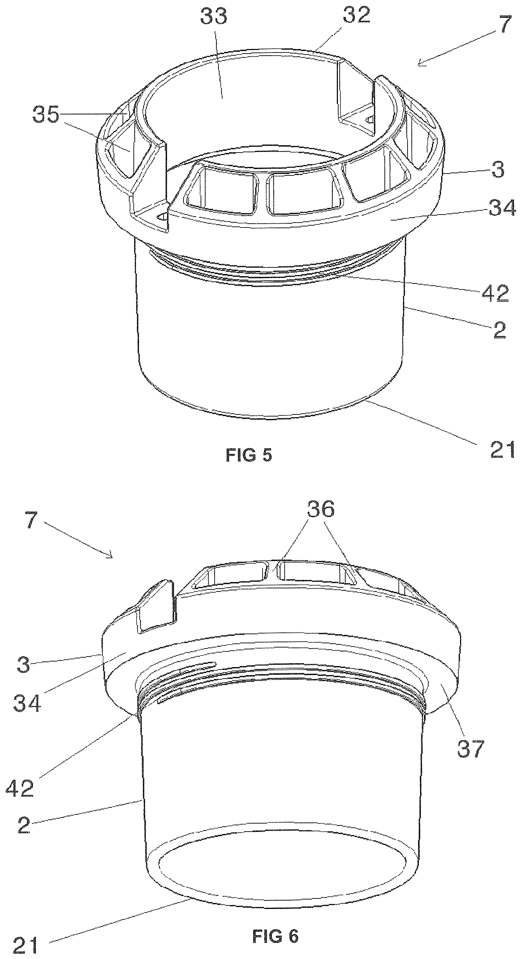

Les figures 5 et 6 présentent deux vues d'un protecteur femelle 7 selon l'invention, adapté pour protéger un filetage femelle sur un tube pour l'extraction de pétrole.

De la même manière que le protecteur mâle 1 présenté sur la figure 1, le protecteur femelle 7 comprend un segment de liaison 2 et un segment pare choc 3.
Les éléments identiques à ceux présentés sur la figure 1 sont repérés par des références numériques identiques.

De la même manière que précédemment, l'extrémité libre 32 du protecteur femelle 7 est adaptée pour être fermée de manière étanche par une capsule non représentée sur cette figure.

Le segment de liaison 2 est ici adapté pour être inséré à l'intérieur du tube que le protecteur femelle est destiné à protéger ; pour un tube ayant un diamètre donné, le diamètre du segment de liaison 2 d'un protecteur femelle 7 sera donc inférieur au diamètre du segment de liaison 2 d'un protecteur mâle 1.
De plus, les filets 42 sont ici disposés sur la face externe du segment de liaison 2, afin de venir coopérer avec les filets disposés à l'intérieur du tube.
De la même manière que précédemment, les filets 42 comprennent typiquement une, deux ou trois spires, d'autres variantes pouvant être envisagées.

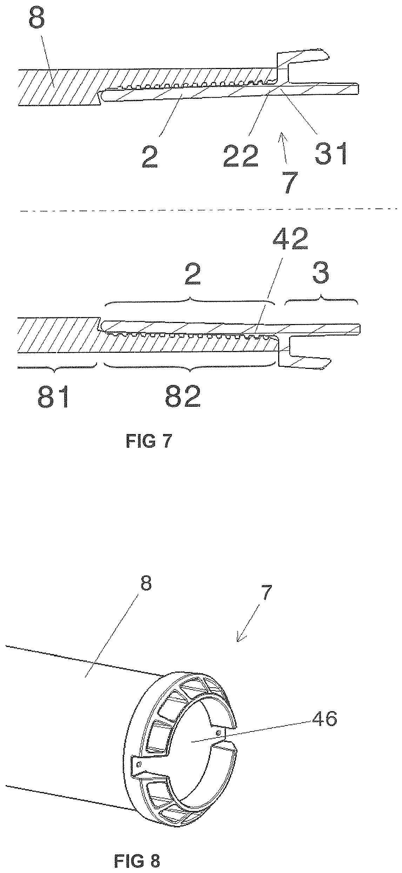

La figure 7 présente une vue en coupe d'un tel protecteur femelle 7 selon l'invention associé avec un tube femelle.

Cette figure met en évidence la différence de structure du segment pare choc 3 du protecteur femelle 7 par rapport à celui du protecteur mâle 1, en raison de la différence de diamètre du segment de liaison 2.

En effet, la couronne externe 34 du segment pare choc 3 doit nécessairement avoir un diamètre maximum supérieur au diamètre du tube, typiquement identique au diamètre maximum du protecteur mâle 1 présenté précédemment, afin de pouvoir amortir les chocs et empêcher qu'ils ne soient appliqués sur le tube.
Dans le cas du protecteur femelle 7, le segment de liaison 2 étant positionné dans le tube, la paroi externe 34 comprend également une cloison 37 s'étendant radialement par rapport à l'axe du protecteur femelle 7, et permettant de créer une butée entre la couronne externe 34 et le segment de liaison 2, et ainsi d'augmenter le diamètre externe de la couronne externe 34 de manière à ce qu'il soit supérieur à celui du tube.
De plus, l'épaisseur du segment de liaison 2 et de la couronne interne 33 est typiquement choisie de manière à ce que le protecteur femelle 7 permette l'insertion d'un moyen de mesure du diamètre interne du tube sur lequel ledit protecteur femelle 7 est destiné à être positionné.
Plus précisément, la figure 7 présente un mode de réalisation dans lequel le tube présente une section principale 81 d'épaisseur sensiblement constante, et une section filetée 82 d'épaisseur réduite, présentant ainsi un logement interne dans lequel le protecteur femelle 7 peut être positionné dans réduire le diamètre interne de l'ensemble à une valeur inférieure au diamètre de la section principale 81 du tube.

De la même manière que pour le protecteur maie 1 présenté précédemment, les espaces internes 35 sont remplis de résine suite à la fabrication du protecteur femelle 7. La résine est avantageusement transparente, et présente un indice sensiblement égal à celui du matériau dont est formé le protecteur. Disposer ainsi de la résine dans les espaces internes 35 du protecteur femelle 7permet non seulement d'améliorer la transparence du protecteur 7 du fait de la continuité d'indice que permet la résine, mais également de sensiblement améliorer la résistance mécanique aux chocs du protecteur 7.

De plus, comme cela a déjà été présenté pour le protecteur mâle 1, le protecteur femelle 7 peut comprendre une capsule 45 ou 46 telle que présentée sur la figure 2, venant obstruer totalement ou partiellement l'extrémité libre du protecteur 7. Cette capsule est alors avantageusement reliée au corps du protecteur 7 via des moyens de liaison tels qu'une chainette, une corde ou un câble, de sorte que le protecteur 7 et la capsule associée ne puissent pas être dissociés.

Le protecteur femelle 7 tel que présenté ne nécessite pas d'être combiné à un film polymère afin de réaliser une liaison étanche.
En effet, dans le cas du protecteur femelle, la compression du tube sur la cloison 37 lorsqu'il vient en butée sur celle-ci ainsi que le contact entre les filets du tube et les filets complémentaires 42 du protecteur femelle 7 suffisent à réaliser une étanchéité suffisante.
Selon une variante, le protecteur femelle 7 présente un joint d'étanchéité au niveau du contact entre le tube et la cloison 37, typiquement un joint torique.
Selon une autre variante, le protecteur femelle 7 est réalisé en bi-injection, la zone de butée du tube sur la cloison 37 étant alors typiquement réalisée en matériau plus élastique que le reste du protecteur 7. de manière à assurer l'étanchéité de la liaison.

La figure 8 présente une vue du protecteur femelle 7 selon l'invention positionné sur un tube 8, et associé avec une capsule 46 venant obstruer son extrémité libre 32.

### Fabrication :

Le protecteur mâle 1 ou femelle 7 est réalisé en polycarbonate par injection.

La géométrie spécifique du protecteur 1 ou 7 présente des avantages importants pour sa réalisation par injection. En effet, l'ensemble des parois du protecteur 1 ou 7 ont une épaisseur sensiblement égale, y compris les parois du segment pare choc 3 en raison de la présence des nervures 36.
Par épaisseur sensiblement égale, on comprend que l'épaisseur à des zones telles que les jonctions entre plusieurs parois du protecteur varie d'un maximum de 150%, ou avantageusement d'un maximum de 100% par rapport aux épaisseurs moyennes des parois des protecteurs, typiquement d'un maximum de 60%.
A titre d'exemple, dans un mode de réalisation dans lequel les parois d protecteur 1 ou 7 ont une épaisseur de 5mm, l'épaisseur au niveau de l'extrémité de liaison 31 du segment pare-choc 3 est avantageusement sensiblement égale à 8,5 mm, un tel écart d'épaisseur sur une zone présentant des formes arrondies étant tout à fait acceptable et adapté pour la réalisation du protecteur par injection, contrairement à des exemples connus de protecteurs qui présentent des variations d'épaisseurs de l'ordre de 300%, et dont la réalisation par un procédé d'injection entraînerait des temps de refroidissement de la pièce rédhibitoires, et des défauts de fabrication importants.

Cette épaisseur sensiblement constante sur l'ensemble du protecteur mâle permet :
- d'éviter les retassures
- de réduire la quantité de matière nécessaire,
- de réduire fortement le temps de solidification par rapport à une pièce équivalente où le segment pare choc 3 serait réalisé « plein », ce qui permet donc de réduire fortement l'usage de la machine en réduisant la durée de cycle pour la réalisation du protecteur mâle 1 et femelle 7, permettant ainsi de réaliser une économie d'énergie et d'avoir une cadence de production plus élevée.

Ainsi, le protecteur 1 ou 7 tel que présenté présente un cout de production réduit par rapport à un protecteur de forme globale équivalente, mais dont le segment pare choc 3 serait « plein ».

De plus, l'ensemble des liaisons et des arrêtes présentent des congés ou des arrondis afin que le protecteur 1 ou 7 ne comprenne pas d'angles vifs, ce qui permet de favoriser le démoulage grâce à ces angles, appelés communément angles de dépouille, et d'éviter les angles vifs pouvant dégrader le film et ayant un impact fortement négatif sur la fabrication du protecteur par injection.

Le polycarbonate est un matériau très performant pour la réalisation des protecteurs 1 ou 7, dont l'injection est rendue possible en raison de la forme spécifique du protecteur.
De plus, le polycarbonate est un matériau transparent, ce qui permet à l'utilisateur de contrôler directement l'état des filets du tube sur lequel le protecteur 1 ou 7 est positionné, sans qu'il soit nécessaire de retirer le protecteur 1 ou 7 pour procéder à un tel contrôle.
Cette facilité de contrôle permet d'éviter les risques de détérioration de la lubrification des filets du tube à chaque retrait et repositionnement du protecteur 1 ou 7.

De plus, le protecteur 1 ou 7 est soumis à un traitement de surface, afin de réaliser un filtrage des ultraviolets et/ou infrarouges, un tel traitement étant typiquement composé d'un trempage, puis d'un traitement plasma sous micro ondes en présence d'ozone.
Le matériau dont est constitué le protecteur 1 ou 7, typiquement du polycarbonate, peut être choisi de manière à présenter de telles caractéristiques de filtrage des ultraviolets et/ou infrarouges.

Les lubrifiants solides utilisés sur les filets des tubes sont en effet sensibles aux ultraviolets et infrarouges, et doivent donc en être protégés.

Ainsi, les protecteurs mâle 1 et femelle 7 proposés permettent de protéger efficacement les extrémités filetées d'un tube d'extraction de pétrole, en réalisant une liaison étanche tout en autorisant les différentes opérations de manutention et de contrôle du tube, et en conservant un coût de production raisonnable du fait de sa forme spécifiquement adaptée à l'injection.
L'injection permet de plus d'obtenir un protecteur 1 ou 7 monobloc, présentant des propriétés mécaniques accrues par rapport à des protecteurs qui seraient réalisés par association de plusieurs pièces réalisées individuellement, et des temps et coûts de fabrication fortement réduits par rapport à des protecteurs ayant des formes non spécifiques ou nécessitant des étapes d'usinage pour leur mise en forme.

## Revendications

1. Protecteur (1 ou 7) de filetage d'un tube d'extraction de pétrole, ledit protecteur (1 ou 7) comprenant :
- un segment de liaison (2), de forme sensiblement tronconique creux autour d'un axe central, et présentant une extrémité proximale (21), une extrémité distale (22), et un filetage (42) complémentaire au filetage dudit tube,
- un segment pare choc (3) présentant une extrémité de liaison (31) et une extrémité libre (32), son extrémité de liaison (31) étant dans le prolongement de l'extrémité distale (22) du segment de liaison (2), ledit segment pare choc (3) présentant :
une couronne interne (33) s'étendant coaxialement et dans le prolongement de l'extrémité distale (22) du segment de liaison (2), et
une couronne externe (34) s'étendant coaxialement à partir de l'extrémité distale (22) du segment de liaison, définissant un espace interne entre lesdites couronnes interne (33) et externe (34), et réalisant une augmentation du diamètre externe du protecteur (1 ou 7) ledit protecteur (1 ou 7) étant **caractérisé en ce que** l'ensemble des parois du protecteur (1 ou 7) ont une épaisseur sensiblement égale, de sorte qu'il présente une forme adaptée pour être réalisé par injection, et qu'il est réalisé par injection.

2. Protecteur (1 ou 7) selon la revendication précédente, **caractérisé en ce que** son extrémité libre (32) est biseautée à sensiblement 45%.

3. Protecteur (1 ou 7) selon l'une des revendications précédentes, **caractérisé en ce qu'**il comprend des nervures (36) longitudinales reliant ladite couronne interne (33) et ladite couronne externe (34), lesdites nervures (36) ayant une épaisseur sensiblement égale à l'épaisseur des couronnes interne (33) et externe (34).

4. Protecteur (1 ou 7) selon l'une des revendications précédentes, **caractérisé en ce qu'**il est réalisé par injection de polycarbonate.

5. Protecteur (1 ou 7) selon l'une des revendications précédentes, **caractérisé en ce qu'**il comprend en outre une capsule montée de manière amovible dans l'extrémité libre (32) du segment pare choc (3) de manière à venir le fermer de manière étanche.

6. Protecteur (1) selon l'une des revendications précédentes, **caractérisé en ce que** :
- ledit segment de liaison (2) a un diamètre décroissant de son extrémité proximale (21) vers son extrémité distale (22) ;
- le filetage (42) complémentaire au filetage dudit tube est disposé à l'intérieur dudit segment de liaison (2),
- la couronne interne (33) comprend une portion tronconique dans le prolongement de l'extrémité distale (22) du segment de liaison (2), et une portion ayant une forme de cylindre creux dans le prolongement de cette portion tronconique,
- la couronne externe (33) a une forme sensiblement tronconique creux, s'étendant à partir de l'extrémité distale (22) du segment de liaison (2), et dont le diamètre augmente en s'éloignant de ladite extrémité distale (22) du segment de liaison (2), le diamètre maximum de ladite couronne externe (34) étant supérieur au diamètre du segment de liaison (2) au niveau de son extrémité proximale (21).

7. Protecteur (1) selon la revendication précédente, **caractérisé en ce qu'**il comprend en outre un film polymère (60) fixé sur la face interne du segment de liaison (2), ledit film polymère (60) étant adapté pour assurer l'étanchéité de la liaison entre le protecteur (1) et un tube d'extraction de pétrole sur lequel ledit protecteur (1) est fixé.

8. Procédé de mise en position d'un protecteur (1) selon la revendication précédente, **caractérisé en ce qu'**il comprend les étapes de :
- retrousser une partie dudit film polymère (60), fixé sur la face interne du segment de liaison (2), sur la face externe du segment de liaison (2),
- mettre en position le protecteur (1) sur un tube d'extraction de pétrole, de manière à ce que le filetage dudit tube et le filetage (42) complémentaire dudit protecteur (1) coopèrent pour assurer un maintien en position du protecteur (1) sur ledit tube,
- dérouler la partie retroussée du film polymère (60) sur ledit tube de manière à assurer l'étanchéité de la liaison entre le protecteur (1) et ledit tube d'extraction de pétrole.

9. Protecteur (7) selon l'une des revendications 1 à 5, **caractérisé en ce que** :
- ledit segment de liaison (2) a un diamètre croissant de son extrémité proximale (21) vers son extrémité distale (22) ;
- le filetage (42) complémentaire au filetage dudit tube est disposé à l'extérieur dudit segment de liaison (2),
- la couronne interne (33) est un cylindre creux, ayant un diamètre égal au diamètre du segment de liaison (2) au niveau de son extrémité distale (22),
- la couronne externe (34) comprend une cloison (37) s'étendant radialement à partir de l'extrémité distale (22) du segment de liaison (2), vers l'extérieur du protecteur (7), et une section sensiblement tronconique s'étendant à partir de ladite cloison (37) dont le diamètre augmente en allant vers l'extrémité libre (32) du segment pare choc (3).

10. Procédé de fabrication d'un protecteur (1 ou 7) selon l'une des revendications 1 à 7 ou 9, **caractérisé en ce qu'**il comprend une étape d'injection durant laquelle ledit protecteur (1 ou 7) est formé.

## Patentansprüche

1. Schutzvorrichtung (1 oder 7) eines Gewindes eines Ölextraktionsrohres, wobei die Schutzvorrichtung (1 oder 7) Folgendes umfasst:
- ein Verbindungssegment (2) in einer im Wesentlichen hohlen kegelstumpfförmigen Form um eine Mittelachse herum, und ein proximales Ende (21), ein distales Ende (22), und ein zum Gewinde des Rohres ergänzendes Gewinde (42) aufweisend,
- ein Stoßschutzsegment (3), das ein Verbindungsende (31) und ein freies Ende (32) aufweist, wobei dessen Verbindungsende (31) in der Fortführung des distalen Endes (22) des Verbindungssegments (2) ist, wobei das Stoßschutzsegment (3) Folgendes aufweist:
einen inneren Kranz (33), der sich koaxial und in der Fortführung des distalen Endes (22) des Verbindungssegments (2) erstreckt, und
einen äußeren Kranz (34), der sich koaxial aus dem distalen Ende (22) des Verbindungssegments heraus erstreckt, einen inneren Raum zwischen dem inneren (33) und äußeren (34) Kranz definiert und eine Vergrößerung des äußeren Durchmessers der Schutzvorrichtung (1 oder 7) realisiert, wobei die Schutzvorrichtung (1 oder 7) **dadurch gekennzeichnet ist, dass** die Gesamtheit der Wände der Schutzvorrichtung (1 oder 7) eine im Wesentlichen gleiche Dicke aufweisen, sodass sie eine geeignete Form aufweist, um durch Spritzguss realisiert zu werden, und durch Spritzguss realisiert wird.

2. Schutzvorrichtung (1 oder 7) nach dem vorstehenden Anspruch, **dadurch gekennzeichnet, dass** deren freies Ende (32) auf im Wesentlichen 45° abgekantet ist.

3. Schutzvorrichtung (1 oder 7) nach einem der vorstehenden Ansprüche, **dadurch gekennzeichnet, dass** sie längliche Rippen (36) umfasst, die den inneren Kranz (33) und den äußeren Kranz (34) verbinden, wobei die Rippen (36) eine Dicke aufweisen, die im Wesentlichen gleich der Dicke des inneren (33) und äußeren (34) Kranzes ist.

4. Schutzvorrichtung (1 oder 7) nach einem der vorstehenden Ansprüche, **dadurch gekennzeichnet, dass** sie durch Polycarbonat-Spritzguss realisiert wird.

5. Schutzvorrichtung (1 oder 7) nach einem der vorstehenden Ansprüche, **dadurch gekennzeichnet, dass** sie weiter eine Kapsel umfasst, die abnehmbar in dem freien Ende (32) des Stoßschutzsegments (3) montiert ist, um dieses dicht zu verschließen.

6. Schutzvorrichtung (1) nach einem der vorstehenden Ansprüche, **dadurch gekennzeichnet, dass**:
- das Verbindungssegment (2) einen von seinem proximalen Ende (21) zu seinem distalen Ende (22) abnehmenden Durchmesser aufweist;
- das zum Gewinde des Rohres ergänzende Gewinde (42) im Inneren des Verbindungssegments (2) angeordnet ist,
- der innere Kranz (33) einen kegelstumpfförmigen Abschnitt in der Fortführung des distalen Endes (22) des Verbindungssegments (2), und einen Abschnitt, der eine Hohlzylinderform aufweist, in der Fortführung dieses kegelstumpfförmigen Abschnitts umfasst,
- der äußere Kranz (33) eine im Wesentlichen hohle kegelstumpfförmige Form aufweist, die sich aus dem distalen Ende (22) des Verbindungssegments (2) erstreckt, und deren Durchmesser sich mit der Entfernung von dem distalen Ende (22) des Verbindungssegments (2) vergrößert, wobei der maximale Durchmesser des äußeren Kranzes (34) größer ist als der Durchmesser des Verbindungssegments (2) im Bereich seines proximalen Endes (21).

7. Schutzvorrichtung (1) nach dem vorstehenden Anspruch, **dadurch gekennzeichnet, dass** sie weiter einen Polymerfilm (60) umfasst, der an der inneren Seite des Verbindungssegments (2) befestigt ist, wobei der Polymerfilm (60) angepasst ist, um für die Dichtheit der Verbindung zwischen der Schutzvorrichtung (1) und einem Ölextraktionsrohr zu sorgen, an dem die Schutzvorrichtung (1) befestigt ist.

8. Verfahren zum Positionieren einer Schutzvorrichtung (1) nach dem vorstehenden Anspruch, **dadurch gekennzeichnet, dass** es die folgenden Schritte umfasst:
- Aufrollen eines Teils des Polymerfilms (60), der an der inneren Seite des Verbindungssegments (2) befestigt ist, an der Außenseite des Verbindungssegments (2),
- Positionieren der Schutzvorrichtung (1) auf einem Ölextraktionsrohr sodass das Gewinde des Rohres und das ergänzende Gewinde (42) der Schutzvorrichtung (1) zusammenwirken, um für ein Festhalten der Schutzvorrichtung (1) in Position auf dem Rohr zu sorgen,
- Abrollen des aufgerollten Teils des Polymerfilms (60) auf dem Rohr, um für die Dichtheit der Verbindung zwischen der Schutzvorrichtung (1) und dem Ölextraktionsrohr zu sorgen.

9. Schutzvorrichtung (7) nach einem der Ansprüche 1 bis 5, **dadurch gekennzeichnet, dass**:
- das Verbindungssegment (2) einen von seinem proximalen Ende (21) zu seinem distalen Ende (22) wachsenden Durchmesser aufweist;
- das zum Gewinde des Rohres ergänzende Gewinde (42) außen am Verbindungssegment (2) angeordnet ist,
- der innere Kranz (33) ein Hohlzylinder ist, der einen Durchmesser gleich dem Durchmesser des Verbindungssegments (2) im Bereich seines distalen Endes (22) aufweist,
- der äußere Kranz (34) eine Wand (37) umfasst, die sich radial von dem distalen Ende (22) des Verbindungssegments (2) nach außerhalb der Schutzvorrichtung (7) erstreckt, und eine im Wesentlichen kegelstumpfförmige Sektion, die sich aus der Wand (37) erstreckt, deren Durchmesser in Richtung des freien Endes (32) des Stoßschutzsegments (3) wächst.

10. Verfahren zur Herstellung einer Schutzvorrichtung (1 oder 7) nach einem der Ansprüche 1 bis 7 oder 9, **dadurch gekennzeichnet, dass** es einen Schritt des Spritzgusses umfasst, währenddessen die Schutzvorrichtung (1 oder 7) gebildet wird.

## Claims

1. Protector (1 or 7) for an oil extraction pipe thread, said protector (1 or 7) comprising:
- a hollow, substantially frustoconical connecting segment (2) about a central axis, and having a proximal end (21), a distal end (22) and a thread (42) complementary to that of the pipe,
- a bumper segment (3) having a connecting end (31) and a free end (32), the connecting end (31) thereof being in the extension of distal end (22) of the connecting segment (2), said bumper segment (3) including:
an internal ring (33) extending coaxially and in the extension of the distal end (22) of the connecting segment (2), and
an external ring (34) extending coaxially from the distal end (22) of the connecting segment, defining an internal space between said internal (33) and external (34) rings, and increasing the external diameter of the protector (1 or 7)
said protector (1 or 7) being **characterised in that** all of the walls of the protector (1 or 7) have a substantially equal thickness, such that it has a shape suitable for production by means of injection-moulding, and **in that** it produced by means of injection-moulding.

2. Protector (1 or 7) according to the above claim, **characterised in that** the free end (32) thereof is bevelled to substantially 45%.

3. Protector (1 or 7) according one the above claims, **characterised in that** it comprises longitudinal ribs (36) connecting said internal ring (33) and said external ring (34), said ribs (36) having a thickness substantially equal to the thickness of the internal (33) and external (34) rings.

4. Protector (1 or 7) according to any of the above claims, **characterised in that** it is produced by means of polycarbonate injection-moulding.

5. Protector (1 or 7) according to any of the above claims, **characterised in that** it further comprises a cap removably mounted in the free end (32) of the bumper segment (3) so as to seal same tightly.

6. Protector (1) according to any of the above claims, **characterised in that**:
- said connecting segment (2) has a decreasing diameter from the proximal end (21) thereof to the distal end (22) thereof;
- the thread (42) complementary to the thread of said pipe is arranged inside said connecting segment (2),
- the internal ring (33) comprises a frustoconical portion in the extension of the distal end (22) of the connecting segment (2), and a portion having a hollow cylindrical shape in the extension of said frustoconical portion,
- the external ring (33) has a substantially hollow frustoconical shape, extending from the distal end (22) of the connecting segment (2), and wherein the diameter increases on moving away from said distal end (22) of the connecting segment (2), the maximum diameter of said external ring (34) being greater than the diameter of the connecting segment (2) at the proximal end (21) thereof.

7. Protector (1) according to the above claim, **characterised in that** it further comprises a polymer film (60) attached on the internal face of the connecting segment (2), said polymer film (60) being suitable for ensuring the tightness of the connection between the protector (1) and an oil extraction pipe whereon said protector (1) is attached.

8. Process for positioning a protector (1) according to the above claim, **characterised in that** it comprises steps for:
- rolling back a portion of said polymer film (60) on the external face of the connecting segment (2),
- positioning the protector (1) on an oil extraction pipe, such that the thread of said pipe and the complementary thread (42) of said protector (1) engage to hold the protector (1) in position on said pipe,
- rolling out the rolled back portion of the polymer film (60) on said pipe so as to ensure the tightness of the connection between the protector (1) and said oil extraction pipe.

9. Protector according to any of claims 1 to 5, **characterised in that**:
- said connecting segment (2) has an increasing diameter from the proximal end (21) thereof to the distal end (22) thereof;
- the complementary thread (42) to the thread of said pipe is arranged outside said connecting segment (2),
- the internal ring (33) is a hollow cylinder, having a diameter equal to the diameter of the connecting segment (2) at the distal end (22) thereof,
- the external ring (34) comprises a partition (37) extending radially from the distal end (22) of the connecting segment (2), towards the outside of the protector (7), and a substantially frustoconical section extending from said partition (37) wherein the diameter increases towards the free end (32) of the bumper segment (3).

10. Process for manufacturing a protector (1 or 7) according to any of claims 1 to 7 or 9, **characterised in that** it comprises an injection-moulding step during which said protector (1 or 7) is formed.
